# EUROPÄISCHE PATENTSCHRIFT

(11) **EP 1 044 789 B1**
(45) Veröffentlichungstag und Bekanntmachung des Hinweises auf die Patenterteilung: **15.01.2003**
(21) Anmeldenummer: 00106367.6
(22) Anmeldetag: 24.03.2000
(51) Int. Cl.: B29C 65/34, B60K 15/03

(54) **Verfahren zur Herstellung eines Kunststoffbauteils und Kraftstoffbehälter für ein Kraftfahrzeug**
Process for manufacturing a plastic object and fuel tank for a vehicle
Procédé de fabrication d'un objet en matière plastique et résevoir de carburant pour un véhicule

(30) Priorität: 13.04.1999 DE 19916494
(43) Veröffentlichungstag der Anmeldung: 18.10.2000
(73) Patentinhaber: Siemens Aktiengesellschaft, 80333 München (DE)
(72) Erfinder: Distelhoff, Markus, Dr., 60594 Frankfurt (DE); Eck, Karl, 60318 Frankfurt (DE); Fröhlich, Winfried, 65520 Bad Camberg (DE); Klöker, Justus, Dr., 61267 Neu-Anspach (DE); Meyer, Knut, Dr., 45239 Essen (DE); Sinz, Wolfgang, Dr., 65843 Sulzbach (DE); Keller, Dieter, 63743 Aschaffenburg (DE); Mohr, Ingo, 56462 Höhn (DE); Rumpf, Bernd, 61130 Nidderau-Windecken (DE); Moser, Rainer, Dr., 65510 Idstein (DE)

(56) Entgegenhaltungen:
- DE-A- 3 717 608
- DE-A- 19 627 742
- DE-C- 19 519 341
- FR-A- 1 581 045
- GB-A- 902 769
- GB-A- 1 236 419
- US-A- 3 383 260
- US-A- 4 801 343

## Beschreibung

Die Erfindung betrifft ein Verfahren zur Herstellung eines Kunststoffbauteils, insbesondere eines Kraftstoffbehälters für ein Kraftfahrzeug, bei dem zunächst Schalenteile aus Kunststoff im Spritzgußverfahren gefertigt werden und aneinanderstoßende Schweißränder der Schalenteile erwärmt und zum Verschweißen miteinander zusammengepreßt werden. Weiterhin betrifft die Erfindung einen Kraftstoffbehälter für ein Kraftfahrzeug mit mehreren aus Kunststoff im Spritzgußverfahren gefertigten und miteinander verschweißten Schalenteilen.

Aus der Praxis ist ein Verfahren zur Herstellung eines als Kraftstoffbehälter ausgebildeten Kunststoffbauteils bekannt geworden, bei dem die Schalenteile jeweils einen umlaufenden, eben gestalteten Schweißrand aufweisen. An der Innenseite der Schalenteile lassen sich in dem Kraftstoffbehälter anzuordnende Bauteile, wie beispielsweise ein Schwalltopf oder Leitelemente, im Spritzgußverfahren fertigen oder vor dem Verschweißen der Schalenteile befestigen. Die Schalenteile werden zum Verschweißen mit ihren Schweißrändern jeweils auf eine erwärmte Platte gedrückt, bis der Kunststoff schmilzt. Anschließend werden die Schalenteile mit ihren Schweißrändern zusammengedrückt.

Nachteilig bei dem bekannten Verfahren ist, daß die Schalenteile für eine zuverlässige und kraftstoffdichte Verschweißung sehr breite Schweißränder und besonders hohe Drücke zum Verpressen der Schweißränder benötigen. Daher hat das mit diesem Verfahren gefertigte Kunststoffbauteil sehr große Toleranzen.

Der Erfindung liegt das Problem zugrunde, ein Verfahren der eingangs genannten Art so zu gestalten, daß es die Einhaltung sehr enger Toleranzen des Kunststoffbauteils ermöglicht. Weiterhin soll ein Kraftstoffbehälter mit zuverlässiger Dichtheit und genauer Form geschaffen werden.

Das erstgenannte Problem wird erfindungsgemäß durch das Verfahren gemäß Anspruch 1 gelöst.

Durch diese Gestaltung werden die Schalenteile in einem von dem senkrecht aneinanderstoßenden Bereich abweichenden Bereich der Schweißränder erwärmt. Hierdurch läßt sich die Form des Kunststofformteils durch die nicht erwärmten Bereiche der Schweißränder oder durch ein Aneinanderpressen einander überlappender Bereiche der Vorsprünge festlegen. Das mit dem erfindungsgemäßen Verfahren gefertigte Kunststoffbauteil läßt sich daher mit besonders engen Toleranzen fertigen.

Die Vorsprünge lassen sich gemäß einer vorteilhaften Weiterbildung nahezu beliebig gestalten, wenn die Vorsprünge im Spritzgußverfahren erzeugt werden. Die Vorsprünge einander gegenüberstehender Schweißränder können hierdurch beispielsweise labyrinthartig ineinandergreifen.

Mit dem bekannten Verfahren hergestellte Kunststoffbauteile können wegen der ebenen Gestaltung der Schweißränder nur einfache Geometrien aufweisen. Die Schweißränder können gemäß einer anderen vorteilhaften Weiterbildung der Erfindung beispielsweise von einer horizontalen Ebene in eine vertikale Ebene gebogen gestaltet sein, wenn die Flanken der Vorsprünge von einem zwischen den Schweißrändern angeordneten Heizelement angeschmolzen werden. Das Heizelement kann anschließend in der Wandung des Kraftstoffbehälters verbleiben. Hierdurch läßt sich das Heizelement zudem zuverlässig in seiner vorgesehenen Position in dem Schweißrand anordnen. Das Heizelement kann beispielsweise als ein oder mehrere nebeneinanderliegende Heizdrähte ausgebildet sein. Die Erwärmung des Heizelements kann beispielsweise durch elektrischen Strom, magnetische Induktion, Wärmeleitung oder durch Microschwingungen erzeugt werden. Ein weiterer Vorteil dieses Verfahrens besteht darin, daß sich hierdurch schwer zugängliche Bereiche der Kunststoffteile einfach verschweißen lassen. Hierdurch ist dieses Verfahren für sich allein erfinderisch.

Das erfindungsgemäße Verfahren ermöglicht eine besonders kostengünstige Herstellung des Kunststoffbauteils, wenn das Heizelement in eine Spritzgußform für zumindest eines der Schalenteile im Bereich des Schweißrandes eingelegt wird und wenn anschließend der Kunststoff für die Schalenteile in die Spritzgußform eingebracht wird.

Das erfindungsgemäße Verfahren läßt sich besonders einfach und schnell durchführen, wenn die Schalenteile zusammengepreßt werden und anschließend das Heizelement erwärmt wird. Das Heizelement schmilzt den Kunststoff zuverlässig an genau dafür vorgesehenen Stellen in einander gegenüberliegenden Bereichen der Schweißränder an. Hierdurch lassen sich sehr genau Bereiche festlegen, in denen die Schalenteile miteinander verschweißt sind, und Abstandhalter für die vorgesehene Form des Kunststoffbauteils bildende Bereiche der Schweißränder verbleiben.

Mit dem erfindungsgemäßen Verfahren läßt sich eine besonders zuverlässige Dichtheit des als Kraftstoffbehälter ausgebildeten Kunststoffbauteils sicherstellen, wenn die Vorsprünge zweier miteinander zu verbindender Schalenteile als einander überlappende Laschen ausgebildet sind.

Das als Kraftstoffbehälter ausgebildete, mit dem erfindungsgemäßen Verfahren hergestellte Kunststoffbauteil hat besonders enge Toleranzen und eine hohe Formgenauigkeit, wenn die Schalenteile in einer dem Kunststoffbauteil entsprechenden Form zusammengesetzt werden und wenn anschließend ein Gas in die Schalenteile eingebracht und zum Verpressen der Schalenteile mit Druck beaufschlagt wird. Als Gas eignet sich beispielsweise erwärmte Luft.

Das erfindungsgemäße Verfahren erfordert zur Herstellung des Kunststoffbauteils mit einer hohen Formgenauigkeit einen besonders geringen Aufwand, wenn an den Schweißrändern radial nach außen hin abstehende Stege erzeugt werden und wenn ein Heizelement zwischen den Stegen angeordnet wird. Die Schalenteile lassen sich hierdurch einfach an den Stegen mit einer Zange oder mit zwei einander gegenüberstehenden, die Stege entlanglaufenden Druckrollen zusammenpressen. Die neben den Stegen befindlichen Bereiche der Schweißränder bleiben hierbei kalt und verbleiben unverformt beim Verschweißen.

Das zweitgenannte Problem, nämlich die Schaffung eines Kraftstoffbehälters der eingangs genannten Art mit zuverlässiger Dichtheit und genauer Form, wird erfindungsgemäß durch den Kraftstoffbehälter gemäß Anspruch 9 gelöst. Da sich das Heizelement gleichmäßig über seine gesamte Länge erwärmen läßt, wird dank der Erfindung sichergestellt, daß einander gegenüberstehende Bereiche der Schalenteile miteinander verschweißt werden. Bei einer Undichtigkeit kann das Heizelement erneut erwärmt werden, bis die Schalenteile des erfindungsgemäßen Kraftstoffbehälters zuverlässig miteinander verschmolzen sind. Die Form des Kraftstoffbehälters wird hierbei nur unwesentlich verändert.

Der erfindungsgemäße Kraftstoffbehälter gestaltet sich besonders kostengünstig, wenn das Heizelement zumindest einen Heizdraht aufweist. Hierdurch läßt sich das Heizelement beispielsweise mit elektrischem Strom, Induktion durch Wärmeleitung oder durch Microschwingungen erwärmen.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1a, 1b: schematisch zwei Schritte eines erfindungsgemäßen Verfahrens zur Herstellung eines Kraftstoffbehälters,
- Fig.2: einen Teilbereich eines Kraftstoffbehälters beim Verpressen von Schalenteilen,
- Fig. 3a, 3b: schematisch zwei Schritte eines weiteren Verfahrens.

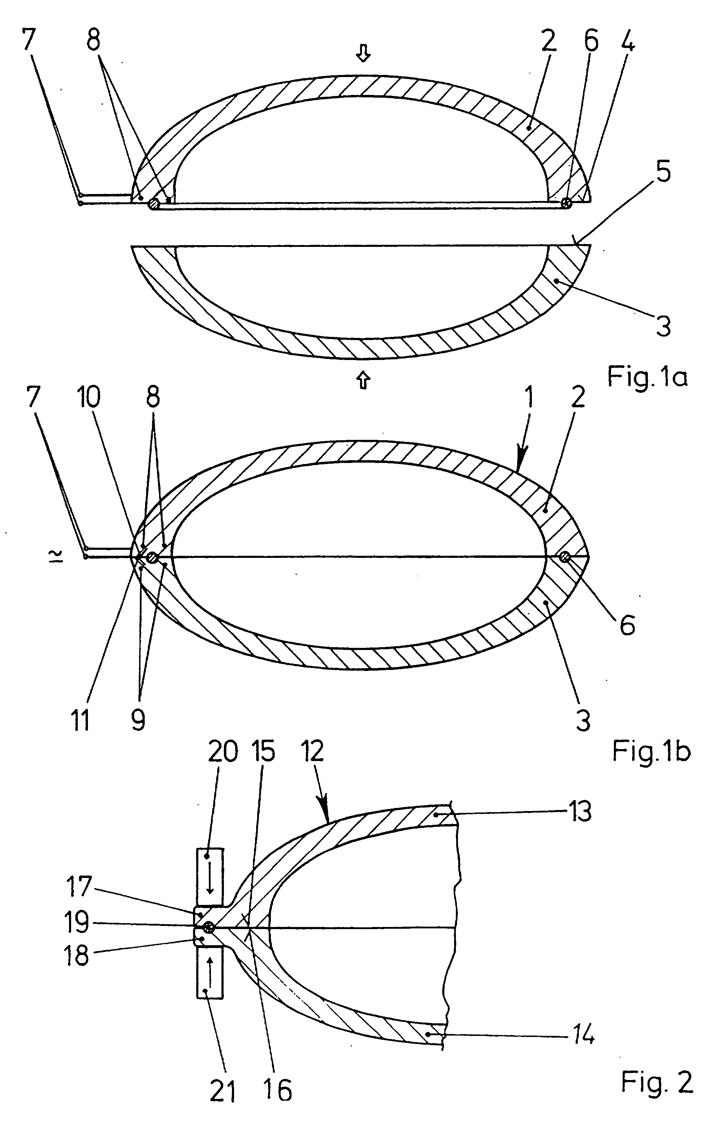

Figur 1a zeigt zwei aus Kunststoff im Spritzgußverfahren gefertigte, zur Zusammensetzung zu einem in Figur 1b dargestellten Kraftstoffbehälter 1 vorgesehene Schalenteile 2, 3 mit jeweils einem Schweißrand 4, 5. Eines der Schalenteile 4 ist einteilig mit einem drahtförmigen Heizelement 6 gefertigt. Von dem Heizelement 6 führen Anschlußleitungen 7 nach außen hin. Das Heizelement 6 dringt hier mit seinem halben Durchmesser in den Schweißrand 4 ein. Hierdurch bildet der Schweißrand 4 seitlich neben dem Heizelement 6 auf den Schweißrand 5 des gegenüberliegenden Schalenteils 3 weisende Vorsprünge 8. Die Schalenteile 2, 3 werden zur Verschweißung zunächst aufeinanderzubewegt, bis das Heizelement 6 gegen den gegenüberliegenden Schweißrand 5 gelangt. Anschließend wird an den Anschlußleitungen 7 eine elektrische Spannung angelegt und das Heizelement 6 erwärmt. Wie Figur 1b zeigt, schmilzt sich das Heizelement 6 in den gegenüberliegenden, in Figur 1a dargestellten Schweißrand 5 ein. Hierbei entstehen in diesem Schweißrand 5 ebenfalls Vorsprünge 9. Die Vorsprünge 8, 9 der Schweißränder 4, 5 liegen mit ihren Flanken 10, 11 an dem Heiz-element 6 an. Hierdurch wird sichergestellt, daß die Schweißränder 4, 5 im Bereich des Heizelementes 6 angeschmolzen werden. Die Vorsprünge 8, 9 werden in einem Abstand zu dem Heizelement 6 nur unwesentlich erwärmt, so daß sie stabil bleiben und sicherstellen, daß sich die Schalenteile 2, 3 nur bis zu einer vorgesehenen Position zusammenschieben lassen. Anschließend sind die Schalenteile 2, 3 zu dem Kraftstoffbehälter 1 verschweißt. Das Heizelement 6 verbleibt in dem Kraftstoffbehälter 1.

Figur 2 zeigt schematisch einen Teilbereich eines Kraftstoffbehälters 12 für ein Kraftfahrzeug mit zwei Schalenteilen 13, 14. Die Schalenteile 13, 14 weisen jeweils einen Schweißrand 15, 16 auf, von denen jeweils nach radial außen hin ein Steg 17, 18 absteht. In den Stegen 17, 18 ist ein Heizelement 19 angeordnet. Das Heizelement 19 schmilzt sich wie das aus Figur 1 in die Schweißränder 15, 16 ein. An der Außenseite werden die Stege 17, 18 zusammengepreßt. Diese Pressung kann durch Stempel 20, 21 oder durch nicht dargestellte, die Stege 17, 18 abfahrende Rollen erzeugt werden. Da die von Stegen 17, 18 aus gesehen radial inneren Bereiche der Schweißränder 15, 16 von dem Heizelement 19 nicht angeschmolzen werden, bleiben die Schalenteile 13, 14 unabhängig von dem Anpreßdruck der Stempel 20, 21 in ihren vorgesehenen Positionen.

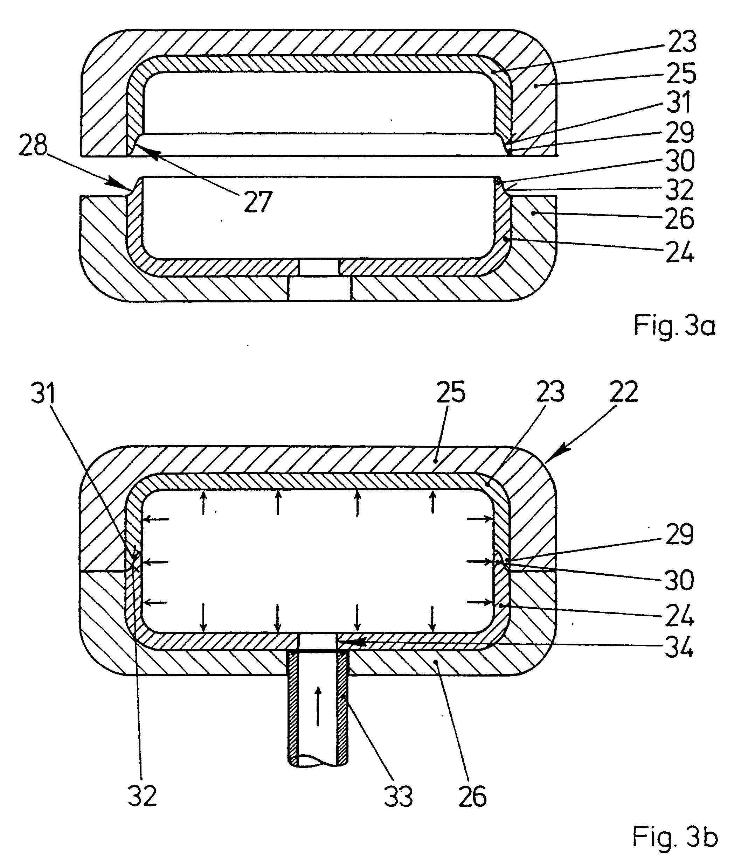

Figur 3a zeigt schematisch ein Verfahren zur Herstellung eines in Figur 3b dargestellten Kraftstoffbehälters 22, bei dem einander gegenüberstehende Schalenteile 23, 24 jeweils in dem Kraftstoffbehälter 22 entsprechend gestalteten Formteilen 25, 26 eingesetzt sind. Die Schalenteile 23, 24 haben jeweils einen Schweißrand 27, 28 mit einem Vorsprung 29, 30. Aufeinanderzuweisende Flanken 31, 32 der Vorsprünge 29, 30 werden angeschmolzen und die Formteile 25, 26 gegeneinandergefahren, bis sie, wie in Figur 3b dargestellt, aneinander anliegen. Die Erwärmung der Flanken 31, 32 kann beispielsweise durch Wärmestrahlung oder erfindungsgemäß wie bei dem in den Figuren 1a und 1b dargestellten Verfahren durch Heizelemente erfolgen. Die Vorsprünge 29, 30 der Schweißränder 27, 28 sind versetzt zueinander angeordnet, so daß sie als einander überlappende Laschen ausgebildet sind. Anschließend wird ein Druckanschluß 33 an eine Öffnung 34 des einen Schalenteils 24 angesetzt und der von den Schalenteilen 23, 24 gebildete Hohlraum mit Druck beaufschlagt. Hierbei werden die Vorsprünge 29, 30 gegeneinandergeproßt und deren Flanken 31, 32 miteinander verschweißt. Hierbei werden die Schalenteile 23, 24 gegen die Formteile 25, 26 gedrückt, so daß der Kraftstoffbehälter 22 eine besonders exakte Form erhält.

## Patentansprüche

1. Verfahren zur Herstellung eines Kunststoffbauteils, insbesondere eines Kraftstoffbehälters für ein Kraftfahrzeug, bei dem zunächst Schalenteile (2, 3, 13, 14, 23, 24) aus Kunststoff im Spritzgussverfahren gefertigt werden und aneinanderstoßende Schweißränder (4, 5, 15, 16, 27, 28) der Schalenteile erwärmt und zum Verschweißen miteinander zusammengepresst werden, an den Schweißrändern auf das jeweils gegenüberliegende Schalenteil weisende Vorsprünge (8, 9, 29, 30) erzeugt werden und die Flanken der Vorsprünge zweier miteinander zu verbindender Schweißränder erwärmt werden, indem sie von einem an einem der Schweißränder angeordneten Heizelement (6, 19) angeschmolzen werden, **dadurch gekennzeichnet, dass** das Heizelement über Anschlussleitungen (7) bestromt wird.

2. Verfahren nach Anspruch 1, **dadurch gekennzeichnet, dass** die Vorsprünge (8, 9, 29, 30) im Spritzgussverfahren erzeugt werden.

3. Verfahren nach zumindest einem der vorhergehenden Ansprüche, **dadurch gekennzeichnet, dass** das Heizelement (6, 19) in eine Spritzgussform für zumindest eines der Schalenteile (2, 3, 13, 14, 23, 24) im Bereich des Schweißrandes (4, 5, 15, 16, 27, 28) eingelegt wird und dass anschließend der Kunststoff für die Schalenteile in die Spritzgussform eingebracht wird.

4. Verfahren nach zumindest einem der vorhergehenden Ansprüche, **dadurch gekennzeichnet, dass** die Schalenteile (2, 3, 13, 14, 23, 24) zusammengepresst werden und anschließend das Heizelement (6, 19) erwärmt wird.

5. Verfahren nach zumindest einem der vorhergehenden Ansprüche, **dadurch gekennzeichnet, dass** Vorsprünge (8, 9, 29, 30) zweier miteinander zu verbindender Schalenteile als einander überlappende Laschen ausgebildet sind.

6. Verfahren nach zumindest einem der vorhergehenden Ansprüche, **dadurch gekennzeichnet, dass** die Schalenteile (2, 3, 13, 14, 23, 24) in einer dem Kunststoffbauteil entsprechenden Form zusammengesetzt werden und dass anschließend ein Gas in die Schalenteile eingebracht und zum Verpressen der Schalenteile mit Druck beaufschlagt wird.

7. Verfahren nach zumindest einem der vorhergehenden Ansprüche, **dadurch gekennzeichnet, dass** an den Schweißrändern (4, 5, 15, 16, 27, 28) radial nach außen hin abstehende Stege erzeugt werden und dass ein Heizelement zwischen den Stegen angeordnet wird.

8. Verfahren nach zumindest einem der vorhergehenden Ansprüche, **dadurch gekennzeichnet, dass** die Schalenteile (2, 3, 13, 14, 23, 24) im Bereich ihrer Stege verpresst werden.

9. Kraftstoffbehälter (1) für ein Kraftfahrzeug mit mehreren aus Kunststoff im Spritzgussverfahren gefertigten und miteinander verschweißten Schalenteilen, **dadurch gekennzeichnet, dass** zwischen den Schalenteilen (2, 3, 13, 14, 23, 24) im Bereich von Schweißrändern (4, 5, 15, 16, 27, 28) ein Heizelement (6, 19) angeordnet ist, das mit Anschlussleitungen (7) zum Anlegen einer elektrischen Spannung verbunden ist.

10. Kraftstoffbehälter (1) nach Anspruch 9, **dadurch gekennzeichnet, dass** das Heizelement (6, 19) zumindest einen Heizdraht aufweist.

11. Kraftstoffbehälter (1) nach Anspruch 10, **dadurch gekennzeichnet, dass** die Anschlussleitungen (7) des Heizdrahts von außen zugänglich sind.

## Claims

1. Method of producing a plastic component, in particular a fuel tank for a motor vehicle, in which firstly shell parts (2, 3, 13, 14, 23, 24) are produced from plastic by the injection-moulding process and abutting weld edges (4, 5, 15, 16, 27, 28) of the shell parts are heated and pressed together with one another for welding, projections (8, 9, 29, 30) pointing towards the respectively opposite shell part are produced at the weld edges and the flanks of the projections of two weld edges to be connected to one another are heated, by being made to begin melting by a heating element (6, 19) arranged at one of the weld edges, **characterized in that** the heating element is supplied with power via connection leads (7).

2. Method according to Claim 1, **characterized in that** the projections (8, 9, 29, 30) are produced by the injection-moulding process.

3. Method according to at least one of the preceding claims, **characterized in that** the heating element (6, 19) is placed into an injection mould for at least one of the shell parts (2, 3, 13, 14, 23, 24) in the region of the weld edge, and **in that** the plastic for the shell parts is subsequently introduced into the injection mould.

4. Method according to at least one of the preceding claims, **characterized in that** the shell parts (2, 3, 13, 14, 23, 24) are pressed together and the heating element (6, 19) is subsequently heated.

5. Method according to at least one of the preceding claims, **characterized in that** the projections (8, 9, 29, 30) of two shell parts to be connected to one another are designed as overlapping butt straps.

6. Method according to at least one of the preceding claims, **characterized in that** the shell parts (2, 3, 13, 14, 23, 24) are put together in a mould corresponding to the plastic component and **in that** a gas is subsequently introduced into the shell parts and subjected to pressure for the pressing of the shell parts.

7. Method according to at least one of the preceding claims, **characterized in that** radially outward-protruding ribs are produced at the weld edges (4, 5, 15, 16, 27, 28) and **in that** a heating element is arranged between the ribs.

8. Method according to at least one of the preceding claims, **characterized in that** the shell parts (2, 3, 13, 14, 23, 24) are pressed in the region of their ribs.

9. Fuel tank (1) for a motor vehicle having a plurality of shell parts produced from plastic by the injection-moulding process and welded with one another, **characterized in that** a heating element (6, 19) is arranged between the shell parts (2, 3, 13, 14, 23, 24), in the region of the weld edges (4, 5, 15, 16, 27, 28) in which heating element (6, 19) is connected to connection leads (7) in order to apply an electric voltage.

10. Fuel tank (1) according to Claim 9, **characterized in that** the heating element (6, 19) has at least one heating wire.

11. Fuel tank (1) according to Claim 10, **characterized in that** the connection leads of the heating wire are accessible from outside.

## Revendications

1. Procédé de fabrication d'une pièce en matière plastique, en particulier d'un réservoir de carburant pour un véhicule automobile, selon lequel des éléments de coquille (2, 3, 13, 14, 23, 24) en matière plastique sont tout d'abord fabriqués selon le procédé de moulage par injection, selon lequel des bords de soudure (4, 5, 15, 16, 27, 28) jointifs des éléments de coquille sont chauffés et assemblés par pression l'un à l'autre pour le soudage, selon lequel des éléments formant saillie (8, 9, 29, 30) orientés vers l'élément de coquille respectivement opposé sont réalisés sur les bords de soudure et selon lequel les flancs des éléments formant saillie de deux bords de soudure à assembler l'un à l'autre sont chauffés en étant fondus à l'aide d'un élément chauffant (6, 19) disposé sur l'un des bords de soudure, **caractérisé en ce que** l'élément chauffant est alimenté en courant par l'intermédiaire de lignes de raccordement (7).

2. Procédé selon la revendication 1, **caractérisé en ce que** les éléments formant saillie (8, 9, 29, 30) sont réalisés durant le procédé de moulage par injection.

3. Procédé selon au moins l'une des revendications précédentes, **caractérisé en ce que** l'élément chauffant (6, 19) est introduit dans un moule de moulage par injection pour au moins l'un des éléments de coquille (2, 3, 13, 14, 23, 24) dans la zone du bord de soudure (4, 5, 15, 16, 27) et **en ce que** la matière plastique pour les éléments de coquille est ensuite introduite dans le moule de moulage par injection.

4. Procédé selon au moins l'une quelconque des revendications précédentes, **caractérisé en ce que** les éléments de coquille (2, 3, 13, 14, 23, 24) sont assemblés par pression et **en ce que** l'élément chauffant (6, 19) est chauffé ensuite.

5. Procédé selon au moins l'une des revendications précédentes, **caractérisé en ce que** les éléments formant saillie (8, 9, 29, 30) de deux éléments de coquille à assembler l'un à l'autre sont réalisés comme couvre-joints se recouvrant.

6. Procédé selon au moins l'une des revendications précédentes, **caractérisé en ce que** les éléments de coquille (2, 3, 13, 14, 23, 24) sont assemblés dans un moule correspondant à la pièce en matière plastique et **en ce qu'**un gaz est introduit ensuite dans les éléments de coquille et est mis sous pression pour l'assemblage par pression des éléments de coquille.

7. Procédé selon au moins l'une des revendications précédentes, **caractérisé en ce que** des nervures s'étendant radialement vers l'extérieur sont réalisées sur les bords de soudure (4, 5, 15, 16, 27, 28) et **en ce qu'**un élément chauffant est disposé entre les nervures.

8. Procédé selon au moins l'une des revendications précédentes, **caractérisé en ce que** les éléments de coquille (2, 3, 13, 14, 23, 24) sont assemblés par pression dans la zone de leurs nervures.

9. Réservoir de carburant (1) pour un véhicule automobile comportant plusieurs éléments de coquille réalisés en matière plastique selon le procédé de moulage par injection et soudés l'un à l'autre, **caractérisé en ce que**, entre les éléments de coquille (2, 3, 13, 14, 23, 24) dans la zone de bords de soudure (4, 5, 15, 16, 27, 28) est disposé un élément chauffant (6, 19) qui est relié à des lignes de raccordement (7) pour l'application d'une tension électrique.

10. Réservoir de carburant (1) selon la revendication 9, **caractérisé en ce que** l'élément chauffant (6,19) présente au moins un filament chauffant.

11. Réservoir de carburant (1) selon la revendication 10, **caractérisé en ce que** les lignes de raccordement (7) du filament chauffant sont accessibles de l'extérieur.
